Europäisches Patentamt

(19) European Patent Office

Office européen des brevets

(11) Publication number: **0 462 946 A1**

## (12) EUROPEAN PATENT APPLICATION

(21) Application number: 91830267.0

(22) Date of filing: 17.06.91

(51) Int. Cl.⁵: **E06C 7/08**, B29C 67/14

(30) Priority: 20.06.90 IT 3586290 U

(43) Date of publication of application: 27.12.91 Bulletin 91/52

(84) Designated Contracting States:
AT BE CH DE DK ES FR GB GR LI LU NL SE

(71) Applicant: MAZZILLI ADELFO & FIGLI S.R.L.
S.S. 207 Via Nettunese km 6,800
I-00040 Ariccia (Roma)IT (IT)

(72) Inventor: Mazzilli, Mauro, c/o Mazzilli Adelfo & Figli s.r.l
S.S. No. 207 Via Nettunense Km 6,800
I-00040 Ariccia, Rome (IT)

(74) Representative: de Simone, Domenico et al
Ing. Barzanò & Zanardo Roma S.p.A. Via Piemonte 26
I-00187 Roma (IT)

(54) Synthetic and glass fibre portable ladder.

(57) A portable ladder (1) consisting of upright members (2) and steps (3), wherein said uprights (2) and said steps (3) are made up of a polyamide fibre and of a glass fibre as well, wherein said glass fibre is present at a percentage ranging from 0 to 50 % and wherein said step members (3) are fastened to said uprights (2) through ultrasonic welding or through mechanical assembling.

EP 0 462 946 A1

FIG.1

This invention relates to a syntehetic and glass fibre portable ladder.

More particularly, this invention relates to a polyammide fibre and glass fibre portable ladder to be employed for installing and maintenance of electric transmission and telephone lines and for employment for home works as swell.

In the management of electric transmission lines and of telephone lines, ladders made up of wood, of metallic alloys or of a plastic reinforced with fibre glass are widely employed, such ladders conferring a good electric insulation as well as a good mechanical strength, to the detriment of the light weight and as a consequence of easy manoeuverability.

Indeed, ladders employed for public services such as telephone or electric transmission lines are to meet the requisites provided by the accident prevention rules in force and, to that end, they are to pass the technical tests imposed, which are intended for checking the resistance to load stresses and the degree of electric insulation. Such characteristics are obtained employing heavy and high-cost materials that give the finding itself a difficult manoeuver-ability so reducing also its safety.

Moreover, different materials are generally employed for making the uprights and the steps, as well as the assembling members.

Accordingly, it is quite clear that there is the need for a ladder that, though satisfying the requisites provided by the accident prevention rules and passing the technical tests imposed to that end, shows features of light weight and easy manoeuverability, good electric resistance as far as all its components are regarded, said ladder being realized employing the same material for all its components and so as to warrant a higher safety to the user.

Through the present invention it has been set forth that a composition of a polyamide fibre and of glass fibre obtained by drawing is particularly suitable for realizing portable ladders that satisfy the requirements mentioned above. The construction of such ladders is carried out employing the material mentioned above for all components of the ladder itself, as for instance uprights and steps obtained by drawing or by injection moulding.

Accordingly, it is a specific object of this invention a portable ladder made up of uprights and steps, wherein said uprights and said steps are realized employing a polyamide fibre and a glass fibre, wherein said glass fibre is present at a percentage between 0 and 50 % and wherein said step members are fastened to said uprights by ultrasonic welding or by mechanical assembling.

According to a preferred embodiment of this invention, said polyamide fibre is Nylon 66 to which a 30 % glass fibre is added.

Again according to the present invention , the uprights and the steps are obtaining by drawing. Preferably said uprights and said steps are obtained employing drawing profiles of different shapes like pipes of various cross sections, or U-shaped or C-shaped profiles or box-type irons with side wings. In order to increase the structural strength, the inner portion of said uprights and said box-type profile steps can be filled with a mass of foamed polyurethane.

Ladders made up of Nylon 66 and glass fibres by mechanical assembling employing screws, rivets, and so on can be ladders of the double-type, grafted-members ladders, telescopic ladders or simple ladders.

Alternatively, said members are associate do said up-rights by means of aluminum rivets or by means of Nylon and glass fibre member.

Again according to the present invention, said uprights and said steps are realized employing an injection moulding process for the polyamide fibre with or without a glass fibre.

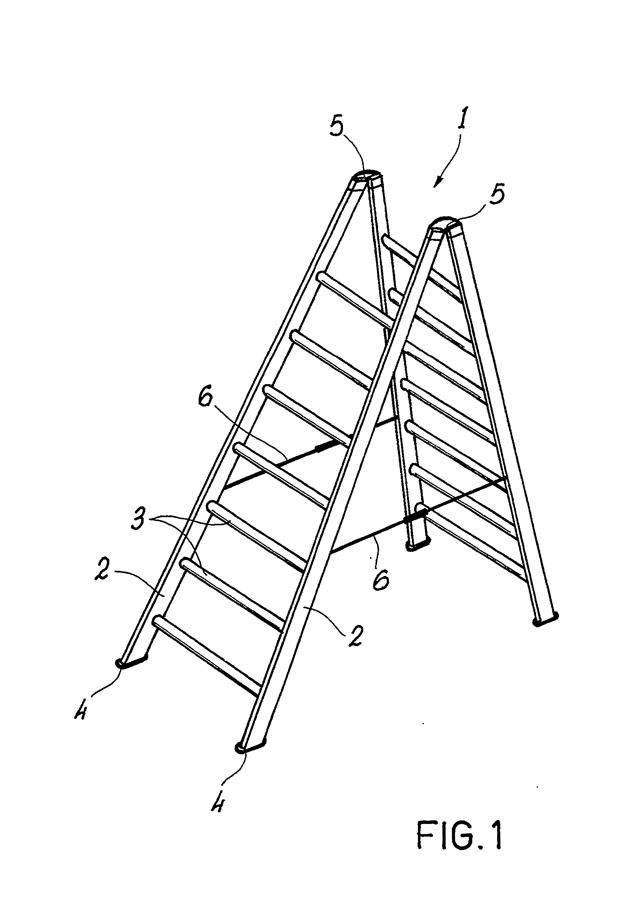

This invention will be disclosed in the following according to some preferred embodiments of the same which are illustrated in Figure 1 which shows a perspective view of a particular embodiment wherein the ladder is of the double-type.

As can be observed in Figure 1, said ladder is of the double-type because each one of the two members is made up of two uprights 2, of steps 3 which are associated to said uprights 2, preferably by ultrasonic welding, each upright 2 having at its end which contacts the ground a supporting member 4 which is made up of anti-slip rubber according to the accident prevention standards.

Hinge members 5, which are preferably made up od aluminum or Nylon and are obtained through injection mouldind are provided at the top end of each pair of uprights 2. Adjustable ties 6 are provided in order ensure a higher stability to the ladder itself when the same is in the open position.

Figure 1 shows that said uprights 2 are tapered from bottom to top in order to make the whole structure lighter.

According to another preferred embodiment of this invention, the steps are fastened by means of rivets or other members (not shown in Figure 1) to the uprights in order to counteract torsional stresses of the steps themselves.

It is to be remembered that ladders according to this invention satisfy the standards set forth by the "Istituto Superiore per la Prevenzione e la Sicurezza del Lavoro" ("Higher Institute for Accident Prevention and for Safety of Work") and, more particularly, that such ladders are built so that the uprights of each member are not parallel but they converge upwards, and the top step length between the inner edges of the uprights 2 is larger than or equal to 300 mm.

Further the ladder disclosed above was subjected to the following tests:

— bending test of the overhanging portion of the uprights;
- bending test of the steps;
- shear resistance test of a step section where the step is grafted into the upright;
- overturning stability test and lateral shift test.

Moreover, the mechanical properties of the materials making up the uprights and the steps were also tested according to the ISPESL standards following to the exposure to weathering.

This invention has been disclosed with particular reference to double ladders, but it is to be understood that similar considerations can also be referred to simple ladders, to grafted-members ladders and to telescopic ladders as well.

This invention has been disclosed just for illustrative and not for limitative purposes according to some preferred embodiments of the same, but it is to be understood that modifications and/or changes can be introduced if those who are skilled in the art without departing from the spirit and scope of the invention for which a priority right is claimed.

## Claims

1. A portable ladder made up of uprights and steps, said ladder being characterized in that said uprights and said steps are realized employing a polyamide fibre and a glass fibre, wherein said glass fibre is present at a percentage ranging from 0 to 50 %, and wherein said step members are fastened through ultrasonic welding or through mechanical assembling.

2. A portable ladder made up of uprights and steps according to claim 1, said ladder bein characterized in that said polyamide fibre is Nylon 66.

3. A portable ladder made up of uprights and steps according to claims 1 and 2, wherein said uprights and said steps are obtained by drawing said polyamide fibre and said glass fibre.

4. A portable ladder made up of uprights and steps according to claim 3, wherein said drawing profiles are tubular profiles.

5. A portable ladder made up of uprights and steps according to claim 3, wherein said drawing profiles are C-shaped profiles.

6. A portable ladder made up of uprights and steps according to claim 3, wherein said drawing profiles are U-shaped profiles.

7. A portable ladder made up of uprights and steps according to claim 3, wherein said drawing profiles are of the box-type and contain a mass of a foamed polyurethane.

8. A portable ladder made up of uprights and steps according to claim 1, wherein said uprights and steps are obtained by injection moulding.

FIG.1

European Patent
Office

**EUROPEAN SEARCH REPORT**

Application Number

EP 91 83 0267

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.5 ) |
| Y | WO-A-8 706 901 (TRIMBLE)<br><br>* page 11, line 12 - page 11, line 27; claims 1,4,5 * | 1,3,4,5,<br>6,7,8 | E06C7/08<br>B29C67/14 |
| Y | CA-A-1 201 564 (CHURCH)<br>* page 11, line 7 - page 14, line 6; claim 3; figures 2-4 * | 1,3,4,8 | |
| Y | GB-A-923 788 (TAYLOR)<br>* page 2, line 68 - page 2, line 108; claims 1,3,4,12; figure 1 * | 1,4,7 | |
| Y | US-A-2 788 167 (MORRISON)<br>* column 1, line 56 - column 2, line 12; claims 1-3 * | 1,6 | |
| Y | US-A-3 327 385 (SHAVER)<br>* column 2, line 33 - column 2, line 55 *<br>* column 4, line 6 - column 4, line 8; figures 1,6 * | 1,4,5,6 | |
| A | US-A-4 029 172 (GREEN)<br>* column 1, line 66 - column 3, line 16; figure 2 * | 1,4,7 | TECHNICAL FIELDS SEARCHED (Int. Cl.5 )<br><br>E06C<br>B29C |

| The present search report has been drawn up for all claims | | |
|---|---|---|
| Place of search | Date of completion of the search | Examiner |
| THE HAGUE | 09 SEPTEMBER 1991 | Hendrickx X. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)